(19) Europäisches Patentamt
European Patent Office
Office européen des brevets

(11) Veröffentlichungsnummer: **0 380 070 B1**

(12) # EUROPÄISCHE PATENTSCHRIFT

(45) Veröffentlichungstag der Patentschrift: **07.09.94**

(51) Int. Cl.$^5$: **C09B 62/513**, D06P 1/384

(21) Anmeldenummer: **90101369.8**

(22) Anmeldetag: **24.01.90**

Die Akte enthält technische Angaben, die nach dem Eingang der Anmeldung eingereicht wurden und die nicht in dieser Patentschrift enthalten sind.

(54) **Wasserlösliche Disazoverbindungen, Verfahren zu ihrer Herstellung und ihre Verwendung als Farbstoffe.**

(30) Priorität: **27.01.89 DE 3902371**

(43) Veröffentlichungstag der Anmeldung:
**01.08.90 Patentblatt 90/31**

(45) Bekanntmachung des Hinweises auf die Patenterteilung:
**07.09.94 Patentblatt 94/36**

(84) Benannte Vertragsstaaten:
**CH DE LI**

(56) Entgegenhaltungen:
**DE-A- 3 536 688**
**DE-B- 1 235 257**
**DE-C- 1 262 213**

(73) Patentinhaber: **HOECHST AKTIENGESELLSCHAFT**

**D-65926 Frankfurt (DE)**

(72) Erfinder: **Schläfer, Ludwig, Dr.**
**Königsberger Strasse 40**
**D-6233 Kelkheim (Taunus) (DE)**
Erfinder: **Springer, Hartmut, Dr.**
**Am Erdbeerstein 27**
**D-6240 Könnigstein/Taunus (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 380 070 B1

## Beschreibung

Aus der Deutschen Patentschrift Nr 1 262 213 ist aus Beispiel 9 ein marineblauer Disazofarbstoff mit der 1-Amino-8-naphthol-3,6-disulfonsäure als bivalente Kupplungskomponente und zwei Anilin-Diazokomponenten bekannt, wobei die Diazokomponenten als faserreaktive Gruppierung beide eine β-Sulfatoethylsulfonamid-Gruppe besitzen. Ein Farbstoff gleicher Konstitution, jedoch mit der N-Methyl-N-(β-sulfatoethylsulfonyl)-amid-Gruppe, bzw. dessen Vinylsulfonamid-Derivat sind aus dem Beispiel 11 der Deutschen Auslegeschrift Nr. 1 235 257 bzw. der US-PS 3 334 961 bekannt. Farbstoffe ähnlicher Konstitution sind aus den Beispielen 7 und 8 der europäischen Patentanmeldungs-Veröffentlichung Nr. 0 219 080 A bekannt.

Mit der vorliegenden Erfindung wurden nunmehr verbesserte, marineblaue Disazoverbindungen mit faserreaktiven Farbstoffeigenschaften gefunden, die bei der Anwendung in Auszieh-Färbeverfahren bei Färbetemperaturen zwischen 40 und 80 °C eine konstante Farbausbeute zeigen und die sich besonders gut zum Einsatz in Klotz-Färbeverfahren eignen, wobei sie bereits bei Raumtemperatur eine hohe Farbausbeute und einen hohen Fixiergrad aufweisen. Ebenso sind sie für den Einsatz im Einphasen-Druckverfahren wegen ihrer Beständigkeit in alkalischen Druckpasten und ihrer hohen Farbausbeute sehr gut geeignet.

Die erfindungsgemäßen Disazoverbindungen entsprechen der allgemeinen Formel (1)

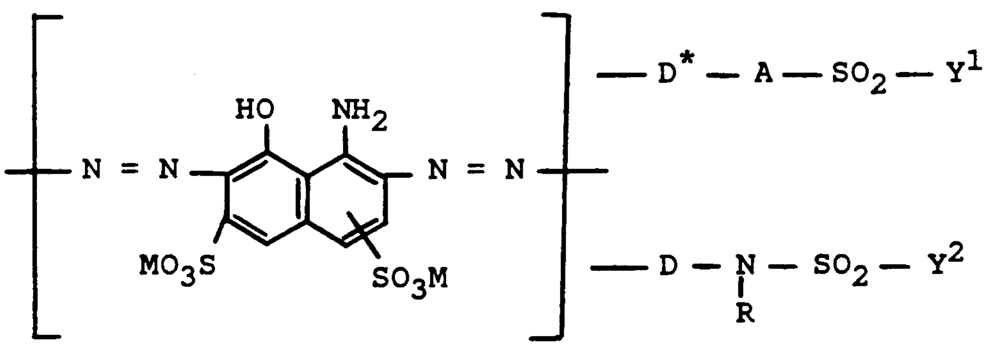

(1)

in welcher bedeuten:

D* ist ein Phenylenrest, vorzugsweise meta- oder para-Phenylenrest, der durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Sulfo und Carboxy substituiert sein kann, oder ist ein Naphthylenrest, der durch 1 oder 2 Sulfogruppen substituiert sein kann;

D ist der meta- oder para-Phenylen-Rest;

A ist eine direkte Bindung oder die Methylengruppe;

R ist eine Alkylgruppe von 1 bis 4 C-Atomen, wie die Ethyl- und insbesondere die Methylgruppe, die substituiert sein kann, wie beispielsweise durch eine Cyano- oder eine Carbalkoxygruppe von 2 bis 5 C-Atomen, wie die Carbomethoxy- oder Carbethoxygruppe, beispielsweise die β-Cyanoethyl- und β-Carbomethoxyethyl-Gruppe;

$Y^1$ und $Y^2$ bedeuten jedes die Vinylgruppe oder die β-Chlorethyl- oder β-Sulfatoethyl-Gruppe, wobei $Y^1$ und $Y^2$ zueinander gleich oder verschiedene Bedeutungen besitzen können;

M ist ein Wasserstoffatom oder ein Alkalimetall, wie Lithium, Kalium und Natrium.

Erfindungsgemäße Disazoverbindungen sind demnach auch solche, die den allgemeinen Formeln (1a) und (1b)

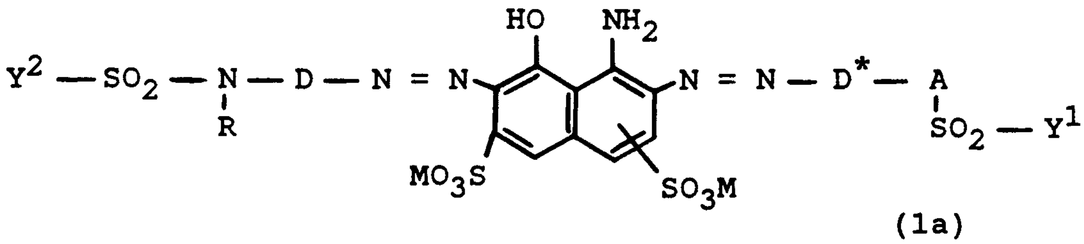

(1a)

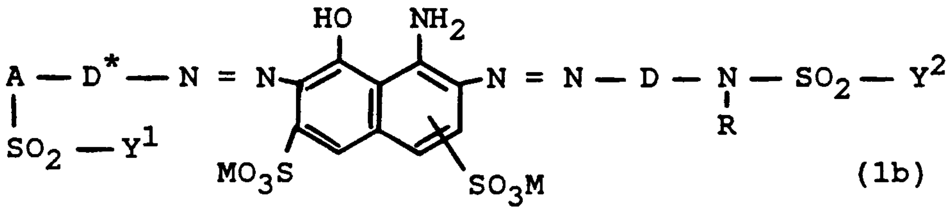

(1b)

entsprechen, in welchen M, D*, D, A, R, $Y^1$ und $Y^2$ die obengenannten, insbesondere bevorzugten Bedeutungen haben.

Die einzelnen Formelglieder der allgemeinen Formeln (1) können innerhalb ihrer Bedeutungen zueinander gleich oder voneinander verschieden sein. Bevorzugt ist D* ein meta-oder para-Phenylenrest, der durch 1 oder 2 Substituenten substituiert sein kann, die aus der folgenden Gruppe von Substituenten ausgewählt sind: 2 Methoxy, 1 Ethoxy, 1 Methyl, 2 Chlor und 1 Sulfo. Insbesondere bevorzugt ist D* der p-Phenylenrest und A eine direkte Bindung. Bevorzugt ist weiterhin D* ein Naphthylenrest, in dessen 2-Stellung die Azogruppe gebunden ist und der durch eine Sulfogruppe neben der Gruppierung $-A-SO_2-Y^1$ substituiert sein kann.

Bevorzugt stehen beide $Y^1$ und $Y^2$ für eine $\beta$-Sulfatoethyl-Gruppe.

Die Substituenten "Sulfo", "Carboxy" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM und Sulfatogruppen entsprechend Gruppen der allgemeinen Formel $-OSO_3M$ , jeweils mit M der obengenannten Bedeutung.

Die neuen Verbindungen der allgemeinen Formel (1) können in saurer Form vorliegen. Bevorzugt sind sie in Form ihrer Alkalimetallsalze und finden bevorzugt in Form der Alkalimetallsalze Verwendung zum Färben (einschließlich des Bedruckens) von hydroxygruppenhaltigen und carbonamidgruppenhaltigen Fasermaterialien.

Die vorliegende Erfindung betrifft weiterhin ein Verfahren zur Herstellung der erfindungsgemäßen Disazoverbindungen, das dadurch gekennzeichnet ist, daß man die Diazoniumverbindungen der Amine der allgemeinen Formeln (2) und (3)

$H_2N—D^*—A—SO_2—Y^1$ (2)

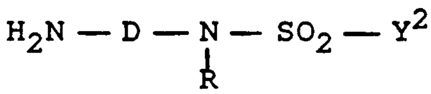

(3)

in welchen D*, D, A, R, $Y^1$ und $Y^2$ die obengenannten Bedeutungen haben, in beliebiger Reihenfolge mit 1-Amino-3,6- oder -4,6-disulfo-8-naphthol als bivalenter Kupplungskomponente kuppelt, wobei die erste Kupplungsreaktion im stark sauren wäßrigen Medium, wie bei einem pH-Wert zwischen 0 und 2, vorzugsweise zwischen 1 und 1,5, und die zweite Kupplungsreaktion im schwach sauren bis schwach alkalischen wäßrigen Medium, wie bei einem pH-Wert zwischen 4 und 8, vorzugsweise zwischen 4,5 und 7, erfolgt. Die Kupplungstemperatur liegt in der Regel zwischen 0 und 30 °C, bevorzugt zwischen 10 und 20 °C.

Aromatische Amine der allgemeinen Formel (2) sind beispielsweise 4-($\beta$-Sulfatoethylsulfonyl)-anilin, 6-Sulfo-4-($\beta$-sulfatoethylsulfonyl)-anilin, 4-Vinylsulfonyl-anilin, 3-($\beta$-Sulfatoethylsulfonyl)-anilin, 3-Sulfo-4-($\beta$-sulfatoethylsulfonyl)-anilin, 3-Vinylsulfonyl-anilin, 2-Methoxy-5-($\beta$-sulfatoethylsulfonyl)-anilin, 2-Methoxy-5-vinylsulfonyl-anilin, 4-Methoxy-5-($\beta$-sulfatoethylsulfonyl)-anilin, 2-Methoxy-4-($\beta$-sulfatoethylsulfonyl)-anilin, 2,5-Dimethoxy-4-($\beta$-sulfatoethylsulfonyl)-anilin, 2,5-Dimethoxy-4-vinylsulfonyl-anilin, 2,4-Dimethoxy-5-($\beta$-sulfatoeth-

ylsulfonyl)-anilin, 2-Methoxy-5-methyl-4-(β-sulfatoethylsulfonyl)-anilin, 2-Methoxy-5-methyl-4-vinylsulfonyl-anilin, 2-Methoxy-5-chlor-4-(β-sulfatoethylsulfonyl)-anilin, 2-Chlor-5-(β-sulfatoethylsulfonyl)-anilin, 2,6-Dichlor-4-(β-sulfatoethylsulfonyl)-anilin, 2-Brom-4-(β-sulfatoethylsulfonyl)-anilin, 2-Carboxy-5-(β-sulfatoethylsulfonyl)-anilin, 2-Sulfo-4-(β-sulfatoethylsulfonyl)-anilin, 4-(β-Sulfatoethylsulfonyl)-1-amino-naphthalin, 5-(β-Sulfatoethylsulfonyl)-1-amino-naphthalin, 6-(β-Sulfatoethylsulfonyl)-2-amino-naphthalin, 7-(β-Sulfatoethylsulfonyl)-2-amino-naphthalin, 8-(β-Sulfatoethylsulfonyl)-2-amino-naphthalin, 6-(β-Sulfatoethylsulfonyl)-1-sulfo-2-amino-naphthalin, 8-(β-Sulfatoethylsulfonyl)-6-sulfo-2-amino-naphthalin, 6-(β-Sulfatoethylsulfonyl)-8-sulfo-2-amino-naphthalin, 3-(β-Sulfatoethylsulfonyl-methyl)-anilin und 4-(β-Sulfatoethylsulfonyl-methyl)-anilin.

Aromatische Amine der allgemeinen Formel (3) sind beispielsweise 4-[N-Methyl-N-(β-sulfatoethylsulfonyl)]-amino-anilin, 3-[N-Methyl-N-(β-sulfatoethylsulfonyl)]-amino-anilin, 4-(N-Methyl-N-vinylsulfonyl)-amino-anilin, 3-(N-Methyl-N-vinylsulfonyl)-amino-anilin, 4-[N-Ethyl-N-(β-sulfatoethylsulfonyl)]-amino-anilin, 3-[N-Ethyl-N-(β-sulfatoethylsulfonyl)]-amino-anilin, 4-[N-(β-Cyanoethyl)-N-(β'-sulfatoethylsulfonyl)]-amino-anilin, 3-[N-(β-Cyanoethyl)-N-(β'-sulfatoethylsulfonyl)]-amino-anilin, 4-[N-(β-Carbomethoxy-ethyl)-N-(β'-sulfatoethylsulfonyl)]-amino-anilin und 3-[N-(β-Carbomethoxy-ethyl)-N-(β'-sulfatoethylsulfonyl)]-amino-anilin.

Die erfindungsgemäßen Verbindungen lassen sich aus ihren Herstellungsgemischen nach allgemein bekannten Methoden für wasserlösliche Verbindungen isolieren, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung.

Falls die letztgenannte Art der Isolierung der erfindungsgemäßen Verbindungen gewählt wird, empfiehlt es sich in Fällen, in denen die Reaktionslösung größere Sulfatmengen enthält, vor dem Eindampfen das in den Lösungen vorhandene Sulfat bspw. durch Fällung als Calciumsulfat und Abtrennung durch Filtration zu entfernen. In manchen Fällen kann es auch wünschenswert sein, die Farbstofflösung, gegebenenfalls nach Aufkonzentrieren und/oder Zusatz von Puffersubstanzen, direkt als Flüssigpräparation der färberischen Verwendung zuzuführen.

Die neuen Verbindungen der vorliegenden Erfindung eignen sich hervorragend als Farbstoffe, insbesondere als faserreaktive Farbstoffe, zum Färben oder Bedrucken von Materialien aus hydroxy- und/oder carbonamidgruppenhaltigen Fasern, wie insbesondere aus nativer oder regenerierter Cellulose oder aus natürlichen, regenerierten oder synthetischen Polyamiden oder Polyurethanen, wie beispielsweise von Baumwolle, Hanf, Leinen, Jute, Viskosekunstseide, Wolle, Seide, Polyamid-6, Polyamid-6,6, Polyamid-11 oder Polyamid-4. Besonders geeignet sind die neuen Verbindungen zum Färben und Bedrucken von Cellulosefasermaterialien.

Die neuen Verbindungen werden auf die genannten Substrate analog bekannten und üblichen Färbe- und Druckverfahren für wasserlösliche, insbesondere faserreaktive, Farbstoffe appliziert und fixiert. Sie besitzen eine gute bis sehr gute Löslichkeit und Stabilität in den Druckpasten und Färbebädern, zeigen eine hohe Farbstärke und einen guten Farbaufbau und liefern mit hohen Fixiergraden marineblaue bis schwarze Färbungen und Drucke, die sich, insbesondere bei den Färbungen und Drucken auf Cellulosefasern, durch gute bis sehr gute Gebrauchs- und Fabrikationsechtheiten, wie beispielsweise Licht-, Wasch-, Meerwasser-, Chlorbadewasser-, Säure- und Alkaliechtheiten, Überfärbeechtheiten, alkalische und saure Schweißechtheiten, Abgasechtheiten (Stickoxidechtheit) sowie Bügel-, Plissier-, Dekatier-, Trockenreinigungs- und Reibechtheiten, auszeichnen. Nicht fixierte Farbstoffanteile lassen sich gut auswaschen. Ebenso besitzen die Färbungen und Drucke der erfindungsgemäßen Verbindungen eine gute Beständigkeit gegenüber Kupferionen bzw. gegenüber Kupferionen abgebenden Stoffen. Bei der Anwendung der erfindungsgemäßen Verbindungen zum Bedrucken von Cellulosefasermaterialien wird darüberhinaus eine Griffverhärtung des gefärbten Materials vermieden; weiterhin erhält man im Druck scharfe Konturen mit einem klaren Weißfond. Die mit den erfindungsgemäßen Verbindungen hergestellten Drucke und Färbungen flecken im nicht-fixierten Zustand beim Ablegen und Abtafeln nicht ab bzw. bluten nicht aus und zeigen eine hohe Säurelagerbeständigkeit, somit kein "acid fading".

Insbesondere sind jedoch die sehr guten Naß- und Trockenlichtechtheiten hervorzuheben. Sehr gute Naßlichtechtheiten zeigen sich bei der Belichtung von Färbungen und Drucken, die mit destilliertem Wasser, mit Trinkwasser und mit alkalischen und sauren Schweißlösungen imprägniert wurden. Diese Naßlichtechtheiten haben inzwischen einen hohen Gebrauchswert erreicht.

Die vorliegende Erfindung betrifft weiterhin die Verwendung der erfindungsgemäßen Verbindungen zum Färben oder Bedrucken der obengenannten Fasermaterialien bzw. ein Verfahren zum Färben oder Bedrukken der obengenannten Fasermaterialien, bei welchen die erfindungsgemäßen Verbindungen analog bekannten und üblichen Verfahrensweisen der Färberei- und Druckereiindustrie auf das Fasermaterial appliziert und anschließend fixiert werden. Beispielsweise werden diese Verfahren so ausgeführt, daß man Cellulosefasermaterialien in einem wäßrigen, gegebenenfalls übliche Färbehilfsmittel enthaltenden Färbebad nach dem Ausziehverfahren unter Verwendung von alkalisch wirkenden Mitteln behandelt, so bei einer

Temperatur zwischen 15 und 105 °C und vorzugsweise zwischen 40 und 80 °C, wobei das Fasermaterial in sehr guten Farbausbeuten gefärbt wird.

Insbesondere im Temperaturbereich zwischen 40 und 80 °C wird der sehr hohe Fixiergrad von der Färbetemperatur nur wenig beeinflußt; dies bedingt eine Färbung mit einer gleichmäßig sehr guten Farbausbeute, die im wesentlichen von der gewählten Färbetemperatur innerhalb dieses Temperaturbereiches unabhängig ist.

Besonders mittels der Klotzverfahren, die in der Technik bekannt und üblich sind, werden auf Cellulosefasermaterialien ebenfalls Färbungen mit ausgezeichneten Farbausbeuten erhalten; dieses Verfahren kann ein- oder zweiphasig durchgeführt werden, so daß die Fixierung mit Hilfe des alkalisch wirkenden Mittels, das gleichzeitig oder nachträglich zur Applikation des Farbstoffes auf das Fasermaterial aufgebracht wurde, oder durch Verweilen des geklotzten Fasermaterials für 5 Minuten bis 20 Stunden bei Raumtemperatur oder Temperaturen bis zu 60 °C oder durch Dämpfen oder durch Behandlung mit Trockenhitze durchgeführt werden kann. Nicht fixierte Farbstoffanteile lassen sicht leicht auswaschen.

Die Verwendung der erfindungsgemäßen Verbindungen in Druckverfahren erfolgt analog den bekannten und üblichen Druck- und Fixiermethoden zum Färben von Cellulosefasern. Man kann hierbei bevorzugt so vorgehen, daß einphasig mit einer die erfindungsgemäße Verbindung und Natriumbicarbonat oder anderes säurebindendes Mittel, wie Kaliumbicarbonat, Natrium- oder Kaliumcarbonat, Natronlauge, Kalilauge oder Natriumtrichloracetat, enthaltenden Druckpaste und anschließendes Dämpfen des bedruckten Materials bei 101 bis 103 °C oder zweiphasig unter Bedrucken mit einer die erfindungsgemäße Verbindung enthaltenden neutralen oder schwach sauren Druckpaste und anschließender Fixierung durch ein heißes, elektrolythaltiges, alkalisches Bad oder durch Überklotzen mit einer alkalischen, elektrolythaltigen Flotte und anschließendem Verweilen, Dämpfen oder Behandlung mit Trockenhitze des überklotzten Materials arbeitet; man erhält farbstarke Drucke mit gutem Stand der Konturen und einem klaren Weißfond. Die Drucke zeigen unabhängig von den Fixierbedingungen eine hohe Nuancenkonstanz.

Das Färben der Polyamid- oder Polyurethanfasern wird üblicherweise aus saurem Milieu ausgeführt. So kann man beispielsweise dem Färbebad Essigsäure oder einen Puffer aus Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisierhilfsmitteln, beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von Stearylamin mit Ethylenoxid. Die Färbungen können sowohl bei Siedetemperatur als auch bei 110 bis 120 °C ausgeführt werden.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

## Beispiel 1

31,9 Teile 1-Amino-8-naphthol-3,6-disulfonsäure gibt man zu einer wäßriger Diazoniumsalz-Lösung von 4-(β-Sulfatoethylsulfonyl)-anilin, hergestellt in üblicher Weise durch Diazotierung von 28,1 Teilen dieses Anilins mittels 30 Teilen konzentrierter Salzsäure und 20 Volumenteilen einer wäßrigen 5n-Natriumnitritlösung und 200 Teilen Wasser bei 0 bis 5 °C, und führt die Kupplungsreaktion bei einem pH-Wert von 0,8 bis 2 und einer Temperatur von etwa 10 °C unter mehrstündigem Rühren zu Ende.

Zu diesem Syntheseansatz mit der hergestellten Monoazo-Zwischenverbindung gibt man die in analoger Weise zum ersten Diazoniumsalz hergestellte wäßrige Diazoniumsalzsuspension aus 30,9 Teilen 4-[N-Methyl-N-(β-sulfatoethylsulfonyl)]-amino-anilin. Man führt die zweite Kupplungsreaktion bei einem pH-Wert von 6 bis 7 und einer Temperatur von 10 bis 20 °C durch.

Anschließend wird die Syntheselösung auf üblichem Wege geklärt, beispielsweise nach Zugabe von Kieselgur durch Filtration, und die erfindungsgemäße Disazoverbindung isoliert, beispielsweise durch Eindampfen oder Sprühtrocknen. Man erhält das erfindungsgemäße Alkalimetallsalz (Natriumsalz) der

Verbindung der Formel

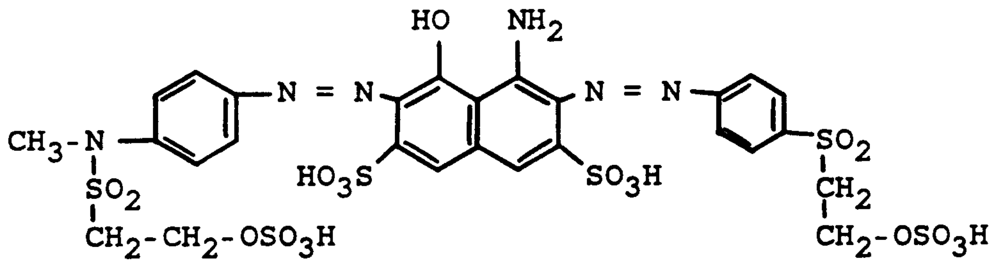

($\lambda_{max}$ = 610 nm)

in Form eines schwarzen, elektrolythaltigen Pulvers. Die erfindungsgemäße Disazoverbindung besitzt sehr gute faserreaktive Farbstoffeigenschaften und färbt die in der Beschreibung genannten Fasermaterialien, wie insbesondere Cellulosefasermaterialien, beispielsweise Baumwolle, nach den in der Technik üblichen Applikations- und Fixiermethoden in marineblauen Tönen. Die erfindungsgemäße Disazoverbindung eignet sich insbesondere auch zum Einsatz von Klotz-Färbeverfahren bei Raumtemperatur. Die mit ihr erhältlichen Färbungen und Drucke zeigen gute Gebrauchs-und Fabrikationsechtheiten, von denen insbesondere die guten Lichtechtheiten der Färbungen und Drucke im sowohl trockenen als auch in mit Trinkwasser oder mit einer wäßrigen Schweißlösung feuchten Zustand und des weiteren die Chlor-, Wasch- und Schweißechtheiten hervorgehoben werden können.

**Beispiel 2**

Die erfindungsgemäße Disazoverbindung des Beispiels 1 kann auch in gleich guter Qualität hergestellt werden, indem man ein äquimolares Gemisch der beiden Diazoniumsalze in wäßrigem Medium, beispielsweise erhältlich durch gleichzeitige Diazotierung der beiden Ausgangsamine, mit der äquivalenten Menge der 1-Amino-8-naphthol-3,6-disulfonsäure als Kupplungskomponente versetzt und den Ansatz zunächst mehrere Stunden bei einem pH-Wert von 0,8 bis 1,5 und einer Temperatur von 8 bis 10 °C hält und anschließend den pH-Wert auf 6 bis 7 erhöht und die Reaktionstemperatur auf 20 bis 30 °C ansteigen läßt. Nach 2 bis 3 Stunden ist die zweite Kupplungsreaktion sodann vollzogen. Man isoliert die erfindungsgemäße Disazoverbindung gemäß Beispiel 1.

**Beispiel 3**

Man versetzt die wäßrige Diazoniumsalzsuspension aus 30,9 Teilen 4-[N-Methyl-N-($\beta$-sulfatoethylsulfonyl)]-amino-anilin mit 58 Teilen der Monoazoverbindung 1-Amino-3,6-disulfo-2-[4'-($\beta$-sulfatoethylsulfonylphenyl)]-azo-8-naphthol und führt die Kupplungsreaktion bei 10 bis 30 °C und einem pH-Wert von 6 bis 7 durch.

Man isoliert die erfindungsgemäße Disazoverbindung in üblicher Weise. Sie ist identisch mit der des Beispiels 1 und zeigt die gleichen Farbstoffeigenschaften.

**Beispiel 4**

Man diazotiert 30,9 Teile 4-[N-Methyl-N-($\beta$-sulfatoethylsulfonyl)]-amino-anilin in üblicher Weise in wäßrigem Medium und versetzt die erhaltene Diazoniumsalzsuspension mit 31,9 Teilen 1-Amino-8-naphthol-3,6-disulfonsäure und führt die Kupplungsreaktion während etwa 24 Stunden bei einer Temperatur von 10 °C und einem pH-Wert von 1,5 bis 2,5 zu Ende.

Die zweite Kupplungsreaktion erfolgt mit dem Diazoniumsalz von 28,1 Teilen 4-($\beta$-Sulfatoethylsulfonyl)-anilin bei einem pH-Wert zwischen 6 und 7 und bei einer Temperatur zwischen 15 und 25 °C.

Man isoliert die erfindungsgemäße Disazoverbindung in üblicher Weise und erhält sie in Form ihres Alkalimetallsalzes, wie Natriumsalzes. Sie besitzt, in Form der freien Säure geschrieben, die Formel

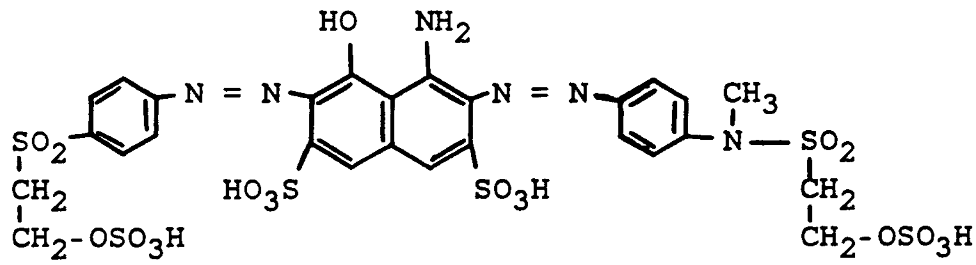

($\lambda_{max}$ = 600 nm)

und zeigt sehr gute faserreaktive Farbstoffeigenschaften. Insbesondere auf Cellulosefasermaterialien liefert sie gemäß den üblichen Applikations- und Fixierverfahren für faserreaktive Farbstoffe marineblaue Färbungen und Drucke mit guten Fabrikations- und Gebrauchsechtheiten.

**Beispiel 5** (nicht erfindungsgemäß)

Man kuppelt in wäßrigem Medium bei einem pH-Wert zwischen 6 und 7 und einer Temperatur zwischen 10 und 30 °C das Diazoniumsalz aus 30,9 Teilen 3-[N-Methyl-N-(β-sulfatoethylsulfonyl)]-aminoanilin-6-sulfonsäure mit 58 Teilen der Monoazoverbindung 1-Amino-3,6-disulfo-2-[4'-(β-sulfatoethylsulfonylphenyl)]-azo-8-naphthol. Man erhält die erfindungsgemäße Disazoverbindung der Formel

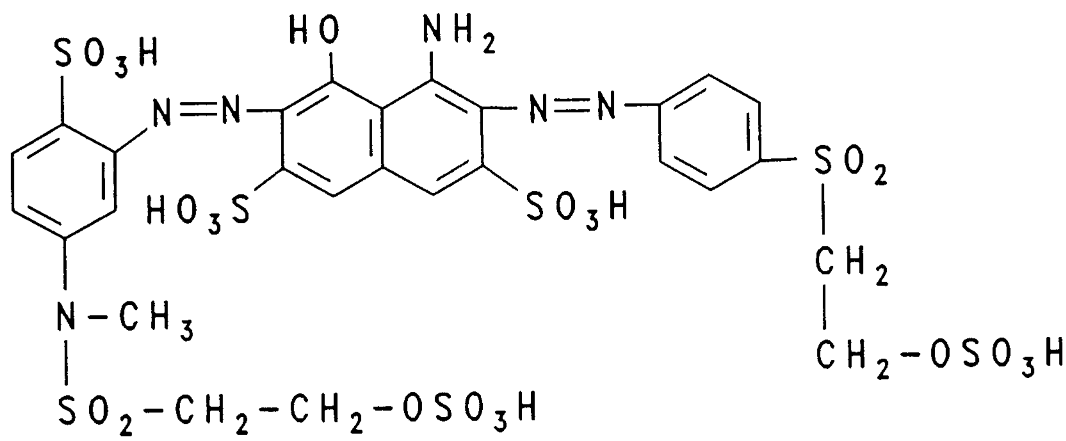

($\lambda_{max}$ = 592 nm)

in Form des Alkalimetallsalzes. Sie besitzt sehr gute faserreaktive Farbstoffeigenschaften und färbt beispielsweise Cellulosefasern in marineblauen Tönen in hohen Fixierquoten mit guten Gebrauchs- und Fabrikationsechtheiten, wie insbesondere mit den für die erfindungsgemäße Disazoverbindung des Beispiels 1 angegebenen Echtheiten.

Beispiele 6 bis 70

In den nachfolgenden Tabellenbeispielen sind weitere erfindungsgemäße Disazoverbindungen entsprechend einer allgemeinen Formel (A)

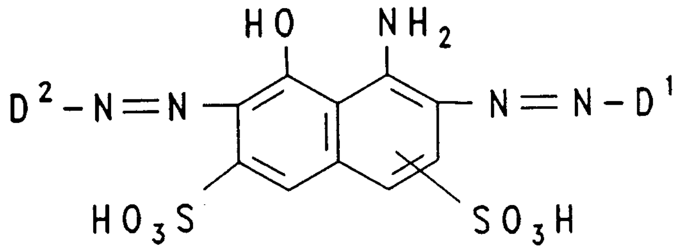

(A)

mit Hilfe ihrer Komponenten, nämlich dem Diazorest $D^1$ als Rest der ersten, stark sauer ankuppelbaren Diazokomponente $D^1$-$NH_2$, dem Rest $D^2$ als der zweiten, schwach sauer bis neutral ankuppelbaren Diazokomponente $D^2$-$NH_2$ und der bivalenten Kupplungskomponente 1-Amino-8-naphthol-3,6- oder -4,6-disulfonsäure. Sie lassen sich in erfindungsgemäßer Weise, beispielsweise analog einem der obigen Ausführungsbeispiele, mit Hilfe der aus dem jeweiligen Tabellenbeispiel ersichtlichen Ausgangsverbindungen (der 1. Diazokomponente $D^1$-$NH_2$, der 2. Diazokomponente $D^2$-$NH_2$ und der entsprechenden bivalenten Kupplungskomponente) herstellen. Sie besitzen sehr guter faserreaktive Farbstoffeigenschaften und liefern insbesondere auf Cellulosefassermaterialien nach den für faserreaktive Farbstoffe üblichen Applikations- und Fixiermethoden farbstarke, marineblaue Färbungen und Druck und mit guten Echtheitseigenschaften.

| Bsp. | Disazoverbindung der Formel (A) | | | Farbton |
|---|---|---|---|---|
| | Rest $D^2$ | Stellung der Gruppe $-SO_3H$ | Rest $D^1$ | |
| 6 | 6-(ß-Sulfatoethylsulfonyl)-1-sulfo-naphth-2-yl | 3- | 3-[N-Methyl-N-(ß-sulfatoethyl-sulfonyl)]-amino-phenyl | marineblau - |
| 7 | 3-[N-Methyl-N-(ß-sulfatoethyl-sulfonyl)]-amino-phenyl | 3- | 4-(ß-Sulfatoethylsulfonyl)-phenyl | marineblau (600) |
| 8 | 3-[N-Ethyl-N-(ß-sulfatoethyl-sulfonyl)]-amino-phenyl | 3- | dito | marineblau (600) |
| 9 | 3-[N-(ß-Cyanoethyl)-(ß-sulfato-ethylsulfonyl)]-amino-phenyl | 3- | dito | marineblau (602) |
| 10 | 4-(N-Methyl-N-vinylsulfonyl)-amino-phenyl | 3- | dito | marineblau (610) |

| | | | | |
|---|---|---|---|---|
| 11 | 3-(N-Methyl-N-vinylsulfonyl)-amino-phenyl | 3- | dito | marine-blau (600) |
| 12 | dito | 3- | 4-Vinylsulfonyl-phenyl | marine-blau (600) |
| 13 | 4-(N-Methyl-N-vinylsulfonyl)-amino-phenyl | 3- | dito | marine-blau (609) |
| 14 | dito | 3- | 2-Sulfo-4-(β-sulfato-ethyl-sulfonyl)-phenyl | marine-blau (596) |
| 15 | 3-(N-Methyl-N-vinylsulfonyl)-amino-phenyl | 3- | dito | marine-blau (590) |
| 16 | 4-[N-Methyl-N-(β-sulfatoethyl-sulfonyl)]-amino-phenyl | 3- | dito | marine-blau (597) |

| Bsp. | Disazoverbindung der Formel (A) Rest $D^2$ | Stellung der Gruppe $-SO_3H$ | Rest $D^1$ | Farbton |
|---|---|---|---|---|
| 17 | 3-[N-Methyl-N-(β-sulfatoethyl-sulfonyl)]-amino-phenyl | 3- | 2-Sulfo-4-(β-sulfato-ethyl-sulfonyl)-phenyl | marine-blau |
| 18 | dito | 3- | 2-Sulfo-5-(β-sulfato-ethylsulfonyl)-phenyl | marine-blau (594) |
| 19 | 4-[N-Methyl-N-(β-sulfatoethyl-sulfonyl)]-amino-phenyl | 3- | dito | marine-blau |
| 20 | 3-[N-Methyl-N-(vinylsulfonyl)]-amino-phenyl | 3- | dito | marine-blau (596) |
| 21 | 4-[N-Methyl-N-(vinylsulfonyl)]-amino-phenyl | 3- | dito | marine-blau (598) |
| 22 | dito | 3- | 2,5-Dimethoxy-4-(β-sulfato-ethylsulfonyl)-phenyl | marine-blau |
| 23 | 4-[N-Methyl-N-(β-sulfatoethyl-sulfonyl)]-amino-phenyl | 3- | dito | marine-blau (520) |
| 24 | 3-[N-Methyl-N-(β-sulfatoethyl-sulfonyl)]-amino-phenyl | 3- | dito | marine-blau |
| 25 | 3-(N-Ethyl-N-vinylsulfonyl)-amino-phenyl | 3- | dito | marine-blau |
| 26 | dito | 3- | 2-Methoxy-5-methyl-4-(β-sulfatoethylsulfonyl)-phenyl | marine-blau |

| Bsp. | Disazoverbindung der Formel (A) Rest $D^2$ | Stellung der Gruppe $-SO_3H$ | Rest $D^1$ | Farbton |
|---|---|---|---|---|
| 27 | 4-[N-Methyl-N-(β-sulfatoethyl-sulfonyl)]-amino-phenyl | 3- | 2-Methoxy-5-methyl-4-(β-sulfatoethylsulfonyl)-phenyl | marine-blau (506) |
| 28 | dito | 3- | 6-(β-Sulfatoethyl-sulfonyl)-naphth-2-yl | marine-blau (512) |
| 29 | 3-[N-Methyl-N-(β-sulfatoethyl-sulfonyl)]-amino-phenyl | 3- | dito | marine-blau |
| 30 | dito | 3- | 6-(β-Sulfatoethylsulfonyl)-1-sulfo-naphth-2-yl | marine-blau (510) |
| 31 | 4-[N-Methyl-N-(β-sulfatoethyl-sulfonyl)]-amino-phenyl | 3- | dito | marine-blau (514) |
| 32 | dito | 3- | 8-(β-Sulfatoethylsulfonyl)-naphth-2-yl | marine-blau |
| 33 | 3-[N-Methyl-N-(β-sulfatoethyl-sulfonyl)]-amino-phenyl | 3- | dito | marine-blau |
| 34 | dito | 3- | 8-Vinylsulfonyl-6-sulfo-naphth-2-yl | marine-blau |
| 35 | 4-(N-Ethyl-N-(β-sulfatoethyl-sulfonyl)]-amino-phenyl | 3- | dito | marine-blau |
| 36 | dito | 3- | 6-Vinylsulfonyl-8-sulfo-naphth-2-yl | marine-blau |

| Bsp. | Disazoverbindung der Formel (A)<br>Rest $D^2$ | Stellung der Gruppe $-SO_3H$ | Rest $D^1$ | Farbton |
|---|---|---|---|---|
| 37 | 3-[N-Methyl-N-(β-sulfatoethylsulfonyl)]-amino-phenyl | 3- | 8-Vinylsulfonyl-6-sulfo-naphth-2-yl | marineblau |
| 38 | dito | 3- | 2-Brom-4-(β-sulfatoethylsulfonyl)-phenyl | marineblau (612) |
| 39 | 4-[N-Methyl-N-(β-sulfatoethylsulfonyl)]-amino-phenyl | 3- | dito | marineblau (620) |
| 40 | 4-[N-Methyl-N-(vinylsulfonyl)]-amino-phenyl | 3- | dito | marineblau (621) |
| 41 | 3-[N-Methyl-N-(β-sulfatoethylsulfonyl)]-amino-phenyl | 4- | 4-(β-Sulfatoethylsulfonyl)-phenyl | marineblau |
| 42 | 4-[N-Methyl-N-(β-sulfatoethylsulfonyl)]-amino-phenyl | 4- | dito | marineblau |
| 43 | dito | 4- | 2-Brom-4-(β-sulfatoethylsulfonyl)-phenyl | marineblau (570) |
| 44 | 3-[N-Methyl-N-(β-sulfatoethylsulfonyl)]-amino-phenyl | 4- | dito | marineblau (566) |
| 45 | dito | 4- | 2,5-Dimethoxy-4-(β-sulfatoethylsulfonyl)-phenyl | marineblau |
| 46 | 4-[N-Methyl-N-(β-sulfatoethylsulfonyl)]-amino-phenyl | 4- | dito | marineblau |

| Bsp. | Disazoverbindung der Formel (A) Rest $D^2$ | Stellung der Gruppe $-SO_3H$ | Rest $D^1$ | Farbton |
|---|---|---|---|---|
| 47 | 4-[N-Methyl-N-(β-sulfatoethyl-sulfonyl)]-amino-phenyl | 4- | 2-Sulfo-4-(β-sulfatoethyl-sulfonyl)-phenyl | marine-blau (576) |
| 48 | 3-[N-Methyl-N-(β-sulfatoethyl-sulfonyl)]-amino-phenyl | 4- | dito | marine-blau (570) |
| 49 | dito | 4- | 6-(β-Sulfatoethylsulfonyl)-1-sulfo-naphth-2-yl | marine-blau |
| 50 | 4-[N-Methyl-N-(β-sulfatoethyl-sulfonyl)]-amino-phenyl | 4- | dito | dito |
| 51 | 4-Vinylsulfonyl-phenyl | 3- | 4-[N-Methyl-N-(β-sulfato-ethylsulfonyl)]-amino-phenyl | dito |
| 52 | 3-(β-Sulfatoethylsulfonyl)-phenyl | 3- | dito | dito |
| 53 | 3-Vinylsulfonyl-phenyl | 3- | dito | dito |
| 54 | 2-Methoxy-5-(β-sulfatoethyl-sulfonyl)-phenyl | 3- | dito | dito |
| 55 | 2-Sulfo-4-vinylsulfonyl-phenyl | 3- | dito | dito |
| 56 | 2-Sulfo-5-vinylsulfonyl-phenyl | 3- | dito | dito |

| Bsp. | Disazoverbindung der Formel (A)<br>Rest $D^2$ | Stellung der Gruppe $-SO_3H$ | Rest $D^1$ | Farbton |
|---|---|---|---|---|
| 57 | 6-(β-Sulfatoethylsulfonyl)-naphth-2-yl | 3- | 4-[N-Methyl-N-(β-sulfato-ethylsulfonyl)]-amino-phenyl | dito |
| 58 | 6-(β-Sulfatoethylsulfonyl)-1-sulfo-naphth-2-yl | 3- | dito | dito |
| 59 | 4-(β-Sulfatoethylsulfonyl)-phenyl | 3- | 3-[N-Methyl-N-(β-sulfato-ethylsulfonyl)]-amino-phenyl | dito |
| 60 | 4-Vinylsulfonyl-phenyl | 3- | dito | marine-blau (590) |
| 61 | 2-Methoxy-5-(β-sulfatoethyl-sulfonyl)-phenyl | 3- | dito | marine-blau (594) |
| 62 | 2-Sulfo-5-(β-sulfatoethyl-sulfonyl)-phenyl | 3- | dito | marine-blau |
| 63 | 4-Sulfo-5-(β-sulfatoethyl-sulfonyl)-phenyl | 3- | dito | dito |
| 64 | 6-(β-Sulfatoethylsulfonyl)-naphth-2-yl | 3- | dito | dito |

| Bsp. | Disazoverbindung der Formel (A) Rest $D^2$ | Stellung der Gruppe $-SO_3H$ | Rest $D^1$ | Farbton |
|---|---|---|---|---|
| 65 | 4-(β-Sulfatoethylsulfonyl-methyl)-amino-phenyl | 3- | 4-[N-Methyl-N-(β-sulfato-ethylsulfonyl)]-amino-phenyl | marine-blau (610) |
| 66 | 3-(β-Sulfatoethylsulfonyl-methyl)-amino-phenyl | 3- | dito | marine-blau |
| 67 | dito | 3- | 3-[N-Methyl-N-(β-sulfato-ethylsulfonyl)]-amino-phenyl | marine-blau |
| 68 | 4-(β-Sulfatoethylsulfonyl-methyl)-amino-phenyl | 3- | dito | marine-blau |
| 69 | 4-[N-Methyl-N-(β-sulfatoethyl-sulfonyl)]-amino-phenyl | 3- | 4-(β-Sulfatoethylsulfonyl-methyl)-amino-phenyl | marine-blau (602) |
| 70 | dito | 3- | 3-(β-Sulfatoethylsulfonyl-methyl)-amino-phenyl | marine-blau (598) |

## Patentansprüche

**1.** Eine Disazoverbindung entsprechend der allgemeinen Formel (1)

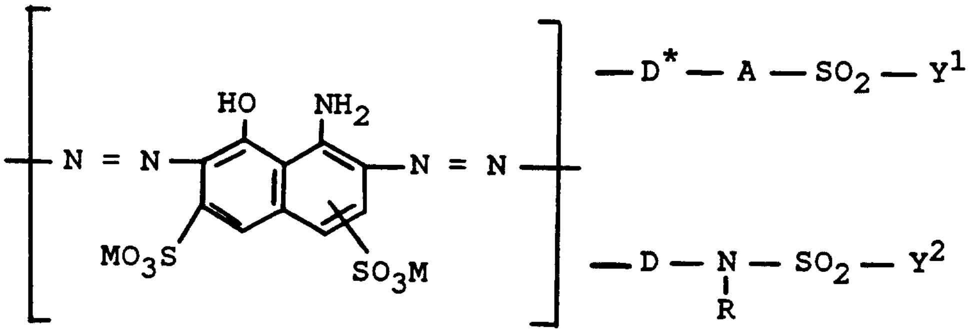

(1)

in welcher bedeuten:

| | |
|---|---|
| D* | ist ein Phenylenrest, vorzugsweise meta- oder para-Phenylenrest, der durch 1 oder 2 Substituenten aus der Gruppe Alkyl von 1 bis 4 C-Atomen, Alkoxy von 1 bis 4 C-Atomen, Chlor, Brom, Sulfo und Carboxy substituiert sein kann, oder ist ein Naphthylenrest, der durch 1 oder 2 Sulfogruppen substituiert sein kann; |
| D | ist der meta- oder para-Phenylen-Rest; |
| A | ist eine direkte Bindung oder die Methylengruppe |
| R | ist eine Alkylgruppe von 1 bis 4 C-Atomen, die substituiert sein kann; |
| $Y^1$ und $Y^2$ | bedeuten jedes die Vinylgruppe oder die $\beta$-Chlorethyl- oder $\beta$-Sulfatoethyl-Gruppe, wobei $Y^1$ und $Y^2$ zueinander gleich oder verschiedene Bedeutungen besitzen können; |
| M | ist ein Wasserstoffatom oder ein Alkalimetall. |

**2.** Verbindung nach Anspruch 1 entsprechend der allgemeinen Formel (1a)

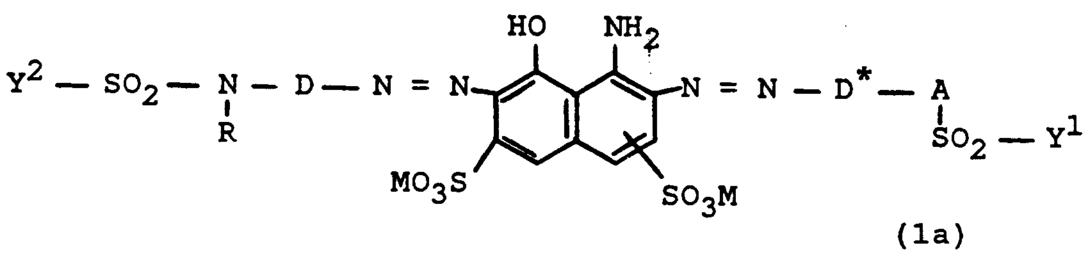

(1a)

in welcher D, D*, A, R, M, $Y^1$ und $Y^2$ die in Anspruch 1 genannten Bedeutungen haben.

**3.** Verbindung nach Anspruch 1 entsprechend der allgemeinen Formel (1b)

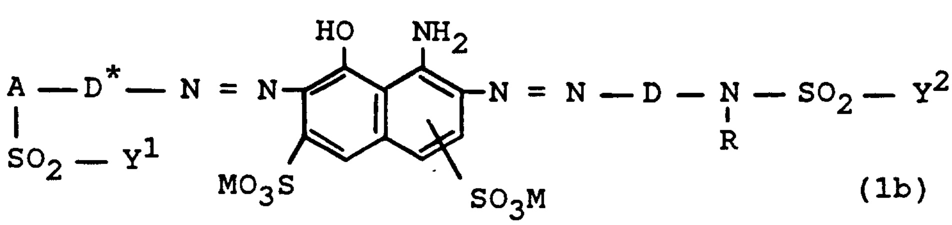

(1b)

in welcher D, D*, A, R, M, $Y^1$ und $Y^2$ die in Anspruch 1 genannten Bedeutungen haben.

**4.** Verbindung nach mindestens einem der Ansprüche 1 bis 3, dadurch gekennzeichnet, daß D* ein meta- oder para-Phenylenrest ist, der durch 1 oder 2 Substituenten substituiert sein kann, die aus der folgenden Gruppe von Substituenten ausgewählt sind: 2 Methoxy, 1 Ethoxy, 1 Methyl, 2 Chlor und 1

Sulfo.

**5.** Verbindung nach mindestens einem der Ansprüche 1 bis 3, dadurch gekennzeichnet, daß D* ein Naphthylenrest, in dessen 2-Stellung die Azogruppe gebunden ist und der durch eine Sulfogruppe neben der Gruppierung $-A-SO_2-Y^1$ substituiert sein kann.

**6.** Verbindung nach mindestens einem der Ansprüche 1 bis 5, dadurch gekennzeichnet, daß D* der para-Phenylenrest und A eine direkte Bindung ist.

**7.** Verbindung nach mindestens einem der Ansprüche 1 bis 6, dadurch gekennzeichnet, daß R die Methylgruppe bedeutet.

**8.** Verbindung nach mindestens einem der Ansprüche 1 bis 7, dadurch gekennzeichnet, daß $Y^1$ und $Y^2$ beide für die $\beta$-Sulfatoethyl-Gruppe stehen.

**9.** Disazoverbindung nach Anspruch 1 der Formel

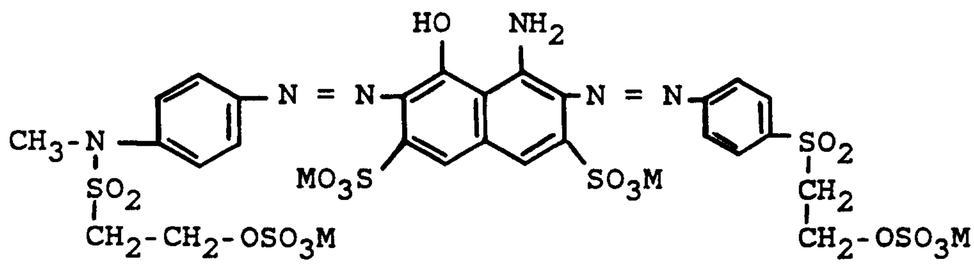

in welcher M die in Anspruch 1 genannte Bedeutung besitzt.

**10.** Disazoverbindung nach Anspruch 1 der Formel

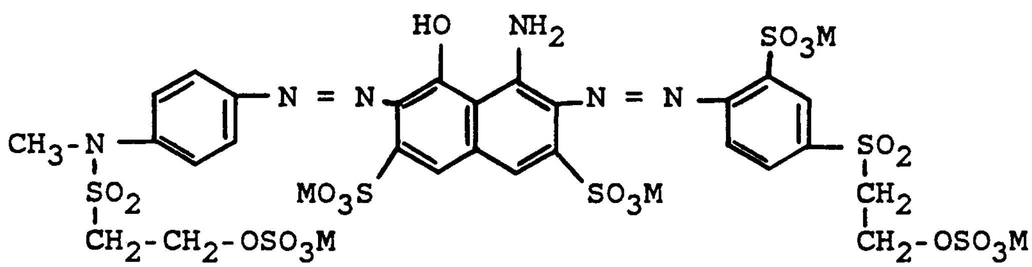

in welcher M die in Anspruch 1 genannte Bedeutung besitzt.

**11.** Verfahren zur Herstellung einer in Anspruch 1 genannten und definierten Disazoverbindung entsprechend der allgemeinen Formel (1), dadurch gekennzeichnet, daß man die Diazoniumverbindungen der Amine der allgemeinen Formeln (2) und (3)

$H_2N - D^* - A - SO_2 - Y^1$ (2)

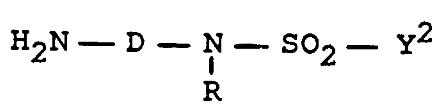 (3)

in welchen D, D*, A, R, $Y^1$ und $Y^2$ die in Anspruch 1 genannten Bedeutungen besitzen, in beliebiger Reihenfolge mit 1-Amino-3,6- oder -4,6-disulfo-8-naphthol als bivalente Kupplungskomponente kuppelt,

wobei die erste Kupplungsreaktion im stark sauren wäßrigen Medium und die zweite Kupplungsreaktion im schwach sauren bis schwach alkalischen wäßrigen Medium erfolgt.

**12.** Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

**13.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

**Claims**

**1.** A disazo compound corresponding to the formula (1)

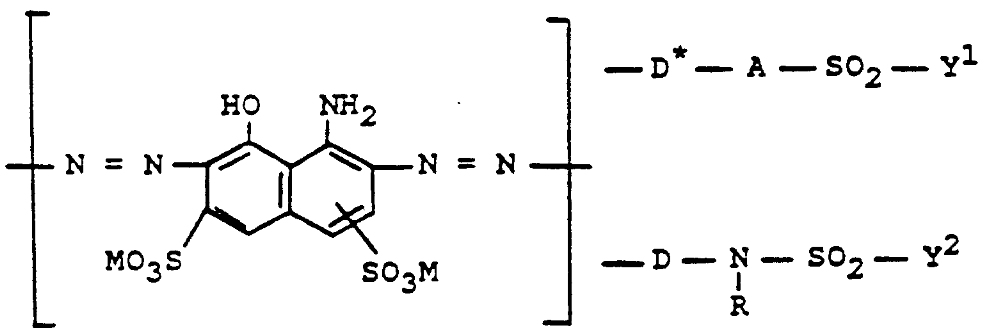

(1)

in which:

| | |
|---|---|
| D* | is a phenylene radical, preferably a meta- or para-phenylene radical, which can be substituted by 1 or 2 substituents from the group comprising alkyl having 1 to 4 carbon atoms, alkoxy having 1 to 4 carbon atoms, chlorine, bromine, sulfo and carboxyl, or is a naphthylene radical, which can be substituted by 1 or 2 sulfo groups; |
| D | is the meta- or para-phenylene radical; |
| A | is a direct bond or the methylene group; |
| R | is an alkyl group having 1 to 4 carbon atoms, which can be substituted; |
| $Y^1$ and $Y^2$ | each denote the vinyl group or the $\beta$-chloroethyl or $\beta$-sulfatoethyl group, it being possible for $Y^1$ and $Y^2$ to have meanings which are identical to or different from one another; and |
| M | is a hydrogen atom or an alkali metal. |

**2.** A compound as claimed in claim 1 corresponding to the formula (1a)

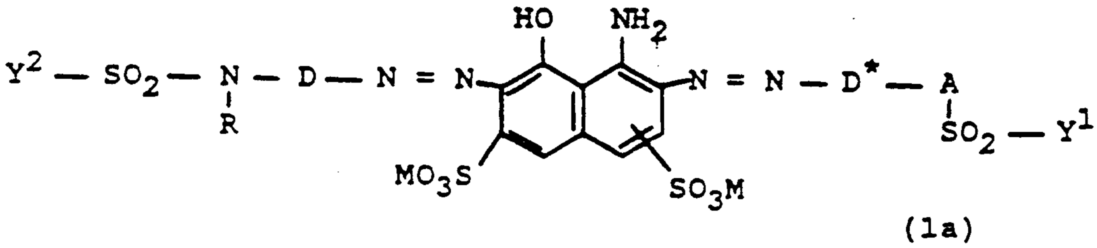

(1a)

in which D, D*, A, R, M, $Y^1$ and $Y^2$ have the meanings given in claim 1.

3. A compound as claimed in claim 1 corresponding to the formula (1b)

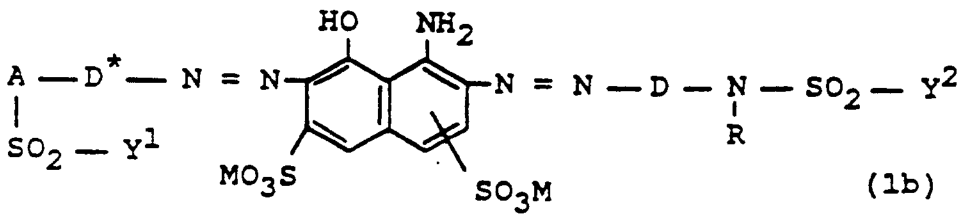

(1b)

in which D, D*, A, R, M, $Y^1$ and $Y^2$ have the meanings given in claim 1.

4. A compound as claimed in at least one of claims 1 to 3, in which D* is a meta- or para-phenylene radical which can be substituted by 1 or 2 substituents chosen from the following group of substituents: 2 methoxy, 1 ethoxy, 1 methyl, 2 chloro and 1 sulfo.

5. A compound as claimed in at least one of claims 1 to 3, in which D* is a naphthylene radical, in the 2-position of which the azo group is bonded and which can be substituted by a sulfo group, in addition to the grouping $-A-SO_2-Y^1$.

6. A compound as claimed in at least one of claims 1 to 5, in which D* is the para-phenylene radical and A is a direct bond.

7. A compound as claimed in at least one of claims 1 to 6, in which R is the methyl group.

8. A compound as claimed in at least one of claims 1 to 7, in which $Y^1$ and $Y^2$ both represent the β-sulfatoethyl group.

9. A disazo compound as claimed in claim 1, of the formula

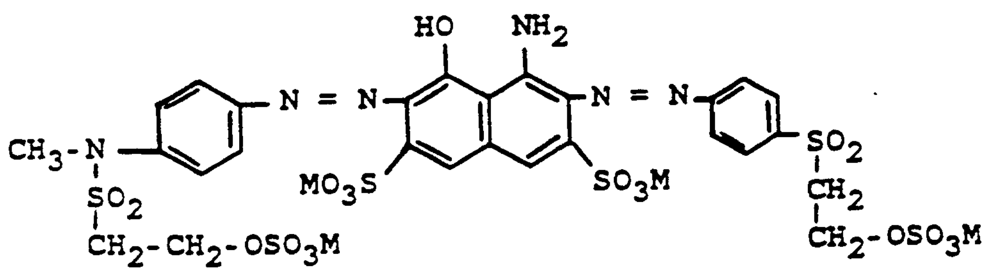

in which M has the meaning given in claim 1.

10. A disazo compound as claimed in claim 1, of the formula

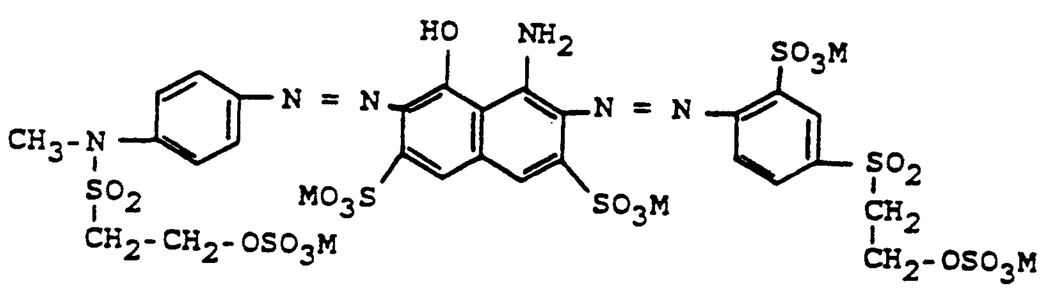

in which M has the meaning given in claim 1.

**11.** A process for the preparation of a disazo compound mentioned and defined in claim 1 and corresponding to the formula (1), which comprises coupling the diazonium compounds of the amines of the formulae (2) and (3)

$H_2N - D^* - A - SO_2 - Y^1$ (2)

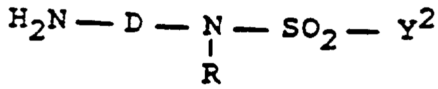 (3)

in which D, D*, A, R, $Y^1$ and $Y^2$ have the meanings given in claim 1, with 1-amino-3,6- or -4,6-disulfo-8-naphthol as the bivalent coupling component in any desired sequence, the first coupling reaction being carried out in a strongly acid aqueous medium and the second coupling reaction being carried out in a weakly acid to weakly alkaline aqueous medium.

**12.** The use of a compound corresponding to the formula (1) of claim 1 for dyeing (including printing) material containing hydroxyl and/or carboxamide groups, in particular fiber material.

**13.** A process for dyeing (including printing) material containing hydroxyl and/or carboxamide groups, in particular fiber material, in which a dyestuff is applied to the material or incorporated therein and is fixed by means of heat and/or with the aid of an alkaline agent, which comprises using a compound corresponding to the formula (1) of claim 1 as the dyestuff.

## Revendications

**1.** Composés disazoïques de formule générale (1) ci-dessous :

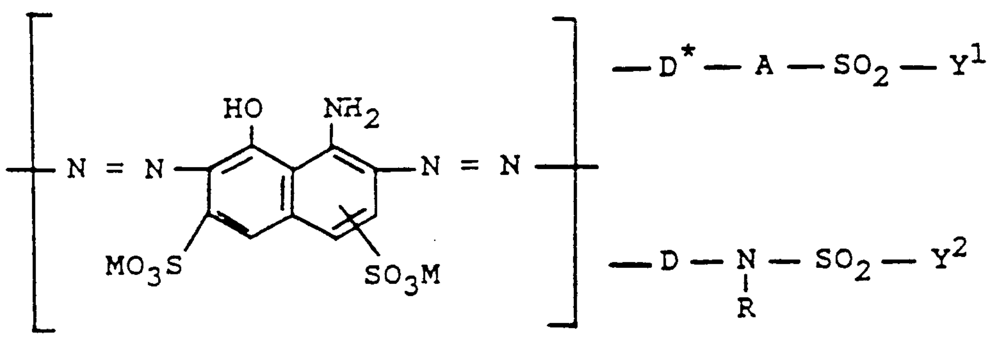 (1)

dans laquelle :

| | |
|---|---|
| D* | représente un radical phénylène, de préférence méta- ou para-phénylène, pouvant avoir 1 ou 2 substituants pris parmi des alkyles et des alcoxy ayant chacun de 1 à 4 atomes de carbone, le chlore, le brome et les groupes sulfo et carboxy, ou bien un radical naphtylène pouvant avoir 1 ou 2 groupes sulfo ; |
| D | est le radical méta- ou para-phénylène ; |
| A | est une liaison directe ou le groupe méthylène ; |
| R | est un alkyle ayant de 1 à 4 atomes de carbone, pouvant être substitué ; |
| $Y^1$ et $Y^2$ | représentent chacun le groupe vinyle, $\beta$-chloréthyle ou $\beta$-sulfatoéthyle, et peuvent être identiques ou différents l'un de l'autre ; et |
| M | est un atome d'hydrogène ou de métal alcalin. |

**2.** Composés selon la revendication 1, de formule générale (1a) :

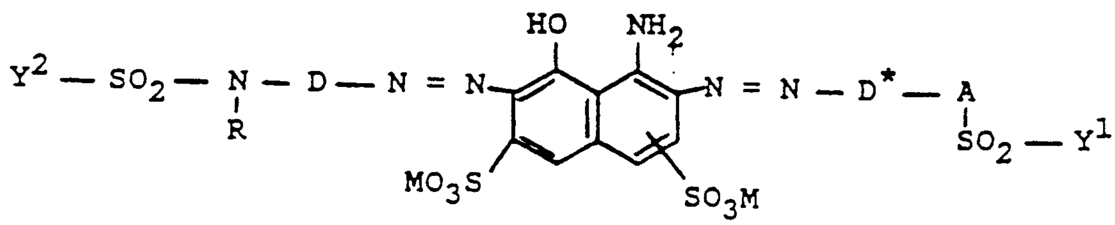

(1a)

les divers symboles ayant les mêmes significations qu'à la revendication 1.

**3.** Composés selon la revendication 1, de formule générale (1b) :

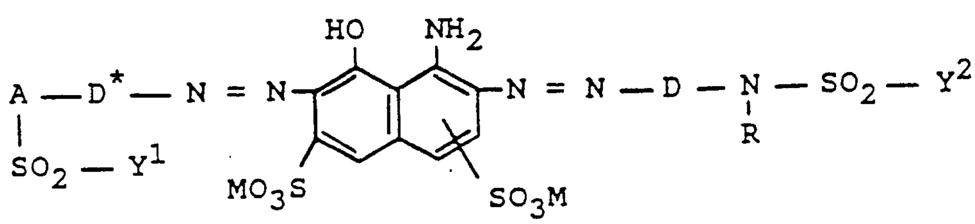

(1b)

les divers symboles ayant également les mêmes significations qu'à la revendication 1.

**4.** Composés selon une ou plusieurs des revendications 1 à 3, caractérisés en ce que D* est un radical méta- ou para-phénylène pouvant avoir 1 ou 2 substituants pris parmi les groupes: deux méthoxy, un éthoxy, un méthyle, deux chlore et un sulfo.

**5.** Composés selon une ou plusieurs des revendications 1 à 3, caractérisés en ce que D* est un radical naphtylène à la position 2 duquel est lié le groupe azoïque, et qui peut avoir comme substituant un groupe sulfo, en plus du groupement $-A-SO_2-Y^1$.

**6.** Composés selon une ou plusieurs des revendications 1 à 5, caractérisés en ce que D* est le radical paraphénylène et A une liaison directe.

**7.** Composés selon une ou plusieurs des revendications 1 à 6, caractérisés en ce que R est le groupe méthyle.

**8.** Composés selon une ou plusieurs des revendications 1 à 7, caractérisés en ce que $Y^1$ et $Y^2$ sont chacun le groupe $\beta$-sulfatoéthyle.

**9.** Composés disazoïques selon la revendication 1, de formule :

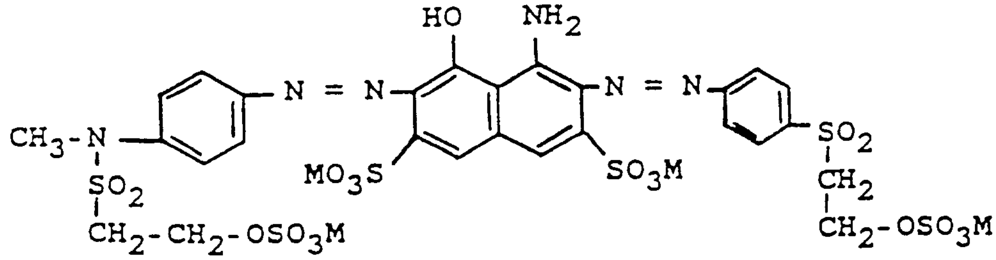

dans laquelle M a la signification indiquée à la revendication 1.

**10.** Composés disazoïques selon la revendication 1, de formule :

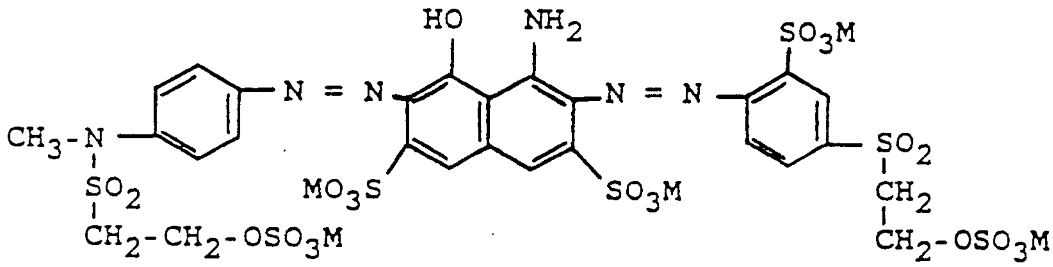

dans laquelle M a la signification indiquée à la revendication 1.

**11.** Procédé de préparation des composés disazoïques de formule (1) telle que définie à la revendication 1, procédé caractérisé en ce que l'on copule les composés de diazonium d'amines de formules générales (2) et (3) :

$H_2N-D^*-A-SO_2-Y^1$ (2)

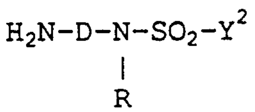

(3)

les divers symboles ayant les mêmes significations qu'à la revendication 1, dans un ordre quelconque, avec le 1-amino-3,6- ou -4,6-disulfo-8-naphtol comme composante de copulation bivalente, en effectuant la première réaction de copulation dans un milieu aqueux fortement acide et la seconde dans un milieu aqueux faiblement acide à faiblement alcalin.

**12.** Emploi des composés de formule (1) selon la revendication 1 pour la teinture, y compris l'impression, de matières à groupes hydroxyliques et/ou carboxamides, en particulier de matières fibreuses.

**13.** Procédé de teinture ou d'impression de matières à groupes hydroxyliques et/ou carboxamides, notamment de matières fibreuses, dans lequel on applique un colorant sur la matière ou on l'incorpore à celle-ci puis on le fixe sous l'action de la chaleur et/ou au moyen d'un agent alcalin, procédé caractérisé en ce que l'on utilise comme colorant un composé de formule (1) selon la revendication 1.